Europäisches Patentamt

European Patent Office

Office européen des brevets

(19)

(11) Numéro de publication: **0 157 678**
**A2**

# (12) DEMANDE DE BREVET EUROPEEN

(21) Numéro de dépôt: **85400471.0**

(22) Date de dépôt: **12.03.85**

(51) Int. Cl.⁴: **G 02 B 23/08**

(30) Priorité: **13.03.84 FR 8403862**

(43) Date de publication de la demande: **09.10.85**
**Bulletin 85/41**

(84) Etats contractants désignés: **AT BE CH DE GB IT LI LU NL SE**

(71) Demandeur: **Etablissement public dit: INSTITUT NATIONAL DE LA RECHERCHE AGRONOMIQUE, 149, rue de Grenelle, F-75341 Paris Cedex 07 (FR)**

(72) Inventeur: **Picard, Didier, 31 Avenue Clémenceau, F-68000 Colmar (FR)**
Inventeur: **Schultz, Guy, 7 Rue Héricourt, F-68200 Mulhouse (FR)**
Inventeur: **Hueber, Jean, 28 Rue Daguerre, F-68200 Mulhouse (FR)**
Inventeur: **Manantsoa, Victor, 10 Rue Jules Verne, F-68200 Mulhouse (FR)**

(74) Mandataire: **Phélip, Bruno et al, c/o Cabinet Harlé & Phélip 21, rue de la Rochefoucauld, F-75009 Paris (FR)**

(54) **Endoscope électronique.**

(57) L'invention concerne un endoscope électronique, notamment utilisable pour l'étude des racines des plantes dans le sol, sans endommager ces dernières, comprenant des moyens d'exploration (3) du type capteur, constitué par une diode laser (12) associée à un dispositif photosensible (15).

La présente invention est du domaine de l'exploration difficile à atteindre. Elle vise plus précisément un endoscope électronique pouvant servir à différents usages, notamment en botanique, en géologie, en agriculture, en archéologie et autres sciences nécessitant une exploration précise de sites cadrés, par exemple souterrains ou intra-corporels.

Jusqu'à présent, l'étude des sites souterrains, par exemple ceux de l'enracinement des plantes in situ se faisait de façon classique par prélèvement d'échantillons de sol, extraction et mensuration des racines. Afin d'éviter la destruction des plantes que nécessitaient ces méthodes, certains chercheurs ont proposé d'appliquer à l'étude du développement des racines dans le sol des dispositifs du type endoscope à miroir ou à fibre optique voisins dans leurs conceptions de ceux utilisés en médecine ou en chirurgie, associés éventuellement à des appareils de prise de vue, par exemple des appareils photographiques ou des caméras. De telles méthodes, bien que non destructrices et plus rapides que les méthodes classiques, n'ont cependant pas donné toute satisfaction aux chercheurs, du fait qu'elles sont malgré tout difficiles à mettre en oeuvre, et qu'elles ne permettent pas une assez bonne approche en ce qui concerne les observations et les clichés qu'elles peuvent donner, et ce du fait, en premier lieu, de la mauvaise luminosité au niveau du site à observer, et, en second lieu, du mauvais contraste au niveau de la prise d'images, ce qui se traduit par des clichés difficiles à interpréter.

Un premier objet de l'invention est de réaliser un endoscope électronique pour l'étude et l'observation de sites difficiles à atteindre, appareil qui, obviant aux inconvénients des dispositifs de la technique antérieure, permet la mise en oeuvre d'une méthode non destructrice du site à explorer.

Un second objet de l'invention est de réaliser un endoscope électronique permettant l'étude d'un site au niveau d'une paroi transparente au contact avec ce dernier.

2

0157678

Un troisième objet de l'invention est de réaliser un endoscope électronique permettant d'analyser et de traiter en données numériques les informations recueillies au niveau du site à explorer.

Un quatrième objet de l'invention est de réaliser un endoscope électronique comportant un dispositif d'entraînement déplaçant automatiquement les moyens d'exploration le long de la paroi transparente en contact avec le site à explorer.

La présente invention a donc pour objet un endoscope électronique constitué par :

- des moyens d'exploration du type capteur, constitué par une diode laser associée à un dispositif photosensible, par exemple un photorécepteur.

Dans une forme de réalisation préférée de l'invention, sont également prévus :

- des moyens de traitement de l'information lumineuse transmise par le photorécepteur, constitué par des moyens de digitalisation et de transmission de données à une unité de traitement coopérant avec une unité de contrôle associée, d'une part, à un moyen de stockage de l'information, et, d'autre part, à des moyens de visualisation; et

- des moyens de positionnement et d'entraînement desdits moyens d'exploration, constitués par un dispositif se déplaçant selon un mouvement hélicoïdal de faible pas par un mouvement relatif résultant de la coopération de deux organes entraînés par deux systèmes d'engrenages respectifs actionnés par un moteur pas-à-pas.

Selon une forme de réalisation particulière, la diode laser est associée à des moyens de focalisation et couplée à un photodétecteur destiné à réguler le flux lumineux émis par ladite diode laser. Les organes imprimant un mouvement relatif au capteur sont constitués par un axe fileté coopérant avec un arbre creux longitudinalement fendu de façon à réaliser un mouvement relatif de plus petit pas que le pas hélicoïdal.

Sont également prévus des moyens de synchronisation de la vitesse de rotation du moteur pas-à-pas, coopérant d'une part avec un senseur et d'autre part avec l'unité de traitement en ligne via une unité de commande du moteur. Ce senseur est activé par un élément réflecteur fixé sur un pignon solidaire de l'axe de rotation du moteur.

L'unité de traitement en ligne est constituée par un microprocesseur, tandis que l'unité de contrôle est constituée par un microordinateur, ces deux unités étant reliées l'une à l'autre par un bus. L'unité de mémorisation est constituée avantageusement par une série de disques souples à simple face et double densité.

D'autres avantages et caractéristiques de l'invention apparaîtront à la lecture de la description suivante d'une forme de réalisation non limitative d'endoscope électronique, notamment destiné à l'étude de l'enracinement des plantes, en référence aux dessins annexés dans lesquels :

Fig. 1 est un schéma montrant la disposition dans le sol de tubes d'observation destinés à recevoir le capteur de l'endoscope électronique selon l'invention.

Fig. 2 est un schéma synoptique des différentes unités constitutives de l'endoscope électronique de l'invention.

Fig. 3 est un schéma synoptique du capteur utilisé selon la présente invention.

Fig. 4 est un schéma du système de commande électronique du capteur utilisé selon l'invention.

Fig. 5 est une vue en coupe longitudinale axiale d'une unité mécanique d'entraînement et de positionnement du capteur utilisé selon l'invention.

Fig. 6 est une vue en coupe transversale de l'unité de mécanique d'entraînement et de positionnement de la figure 5 au niveau du support de capteur.

Fig. 7 est une vue en perspective à plus petite échelle du support de capteur de la figure 6.

Fig. 8 est un schéma synoptique des moyens de synchronisation entre la vitesse de rotation du moteur et les moyens de visualisation.

Fig. 9 est un schéma    électronique des moyens de synchronisation de la figure 8.

Fig. 10 est un schéma synoptique de l'unité de traitement en ligne utilisée selon l'invention, et

Fig. 11 est un schéma général de fonctionnement du Rhizoscope selon l'invention.

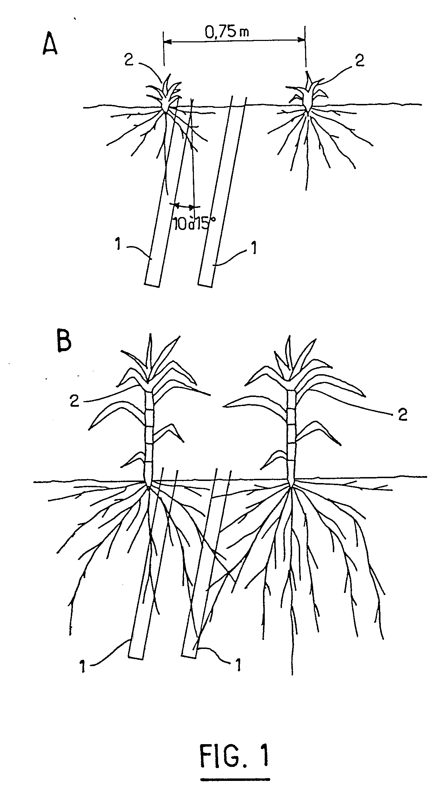

Comme représenté sur la figure 1, on dispose dans le sol un certain nombre de tubes 1 au voisinage de plants de maïs 2, ces tubes étant inclinés de 10 à 15° environ ou plus selon besoin par rapport à la normale, tandis que les plants de maïs sont espacés de 0,75 mètre. Le stade A représente un stade précoce de croissance du maïs, tandis que le stade B représente un stade plus tardif. Dans les deux cas et plus particulièrement dans le stade B, les racines des plants respectifs viennent au contact des tubes 1.

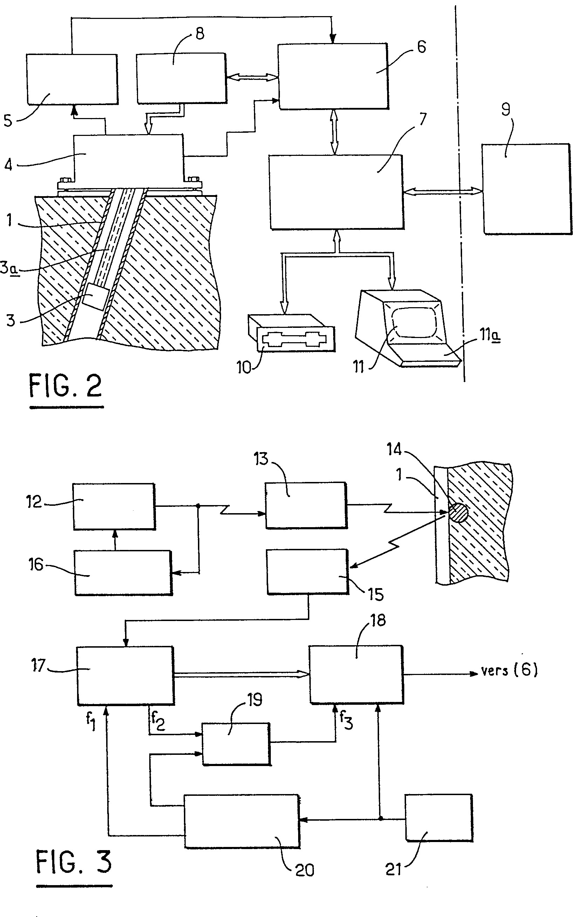

Sur la figure 2, on voit également un tube 1 à l'intérieur duquel est disposé un capteur 3 relié à un moteur pas-à-pas 4 par une tige de positionnement et d'entraînement 3a.

Le moteur 4 est associé à une unité de mesure de sa vitesse de rotation et de détection de fin de ligne 5, elle-même reliée à une unité de traitement en ligne 6 qui d'une part coopère avec une unité de contrôle 7 et d'autre part à une unité de commande du moteur 8. L'unité de contrôle 7 coopère avec une unité de traitement logique 9, et est reliée par ailleurs à   une unité de mémorisation 10 et à des moyens de visualisation 11.

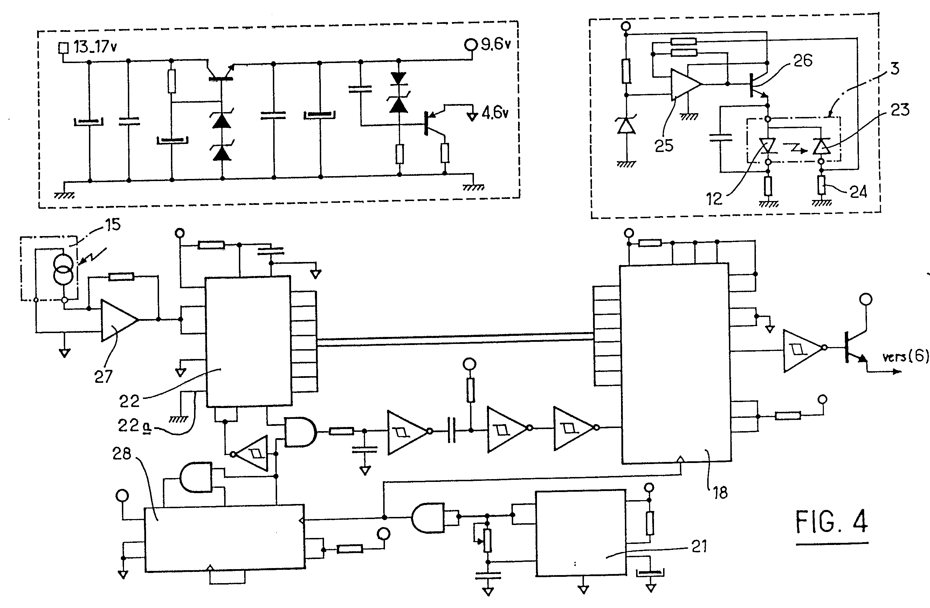

Comme représenté schématiquement sur la figure 3, le capteur 3 est constitué d'un émetteur 12, par exemple une diode laser dont le flux lumineux est focalisé par une optique 13 avant de traverser la paroi du tube 1 et venir rencontrer une racine 14 du sol au contact du tube 1, et d'un photorécepteur 15 recevant le flux lumineux réfléchi par la racine 14. La diode laser 12 est associée à un dispositif d'asservissement    de puissance optique. Le photorécepteur 15 transmet un signal correspondant 16 au flux lumineux réfléchi à une unité de digitalisation 17 où le signal ainsi obtenu est digitalisé sous 8 bits et transmis par l'unité de transmission 18 sous 1 bit à l'unité de traitement en ligne 6. Les unités de digitalisation 17 et de transmission 18 coopèrent selon des trajets départ $f_1$, occupation $f_2$, synchronisation $f_3$ avec des unités de retard 19 et de logique de synchronisation 20, associées à une horloge 21.

Comme schématisé sur la figure 4, le système électronique du capteur 3 se divise essentiellement en trois parties.

La première partie est constituée par un dispositif permettant d'obtenir une alimentation stabilisée, et qui transforme la tension d'entrée (15 volts $\pm$ 2 volts) en deux tension de sortie /4,6 et 9,6 volts par rapport à la masse électronique (0 volt) 7. La tension de 4,6 volts est prise comme référence de tension pour la logique de digitalisation et de transmission (17, 18) des signaux acquis, ce qui permet d'obtenir les tensions d'alimentation virtuelle de 5 volts (alimentation TTL) et de 4,6 volts (tension de référence analogique du convertisseur analogique/numérique 22; broche 22a). Ce montage est utilisé pour satisfaire les trois niveaux de tension nécessaires au capteur 3 et pour limiter à deux le nombre de systèmes de transmission électrique par bague et balai entre l'unité de transmission en ligne 6 et le capteur 3.

La seconde partie du système électronique est constituée par un dispositif d'asservissement de l'intensité lumineuse de la diode laser 12, qui est couplée à un photodétecteur 23, ce qui permet de réguler le flux lumineux de la diode afin de s'affranchir notamment des effets liés aux variations de température. Si, pour une raison ou une autre, ce flux diminue alors le photodétecteur 23 conduira moins de courant, ce qui aménera une diminution de la tension aux bornes de la résistance 24. Cette diminution entraînera par l'intermédiaire de l'amplificateur 25 une augmentation de la conduction du transistor 26, donc un accroissement du flux lumineux de la diode 12.

La troisième partie du système électronique du capteur est constituée par un système logique de digitalisation et de transmission des signaux acquis (référencés 17, 18 sur la figure 3).

Ce système se divise lui-même en quatre parties, à savoir un circuit de transformation du signal lumineux en signal électrique constitué par le photorécepteur 15 et l'amplificateur opérationnel 27 ; un second circuit de numérisation du signal est représenté par le convertisseur analogique/numérique 22 ; un troisième circuit de transmission série des données parallèles assurée par l'unité asynchrone de réception/transmission 18 ; le quatrième circuit ou unité de synchronisation se compose d'une horloge 21, d'un séquenceur-diviseur 28 qui commande le moment de la conversion analogique/numérique et le fonctionnement synchrone entre le convertisseur analogique/numérique 22 et l'unité asynchrone de réception/transmission 18, via des circuits d'intégration, de différentiation et de mise en forme du signal classiques.

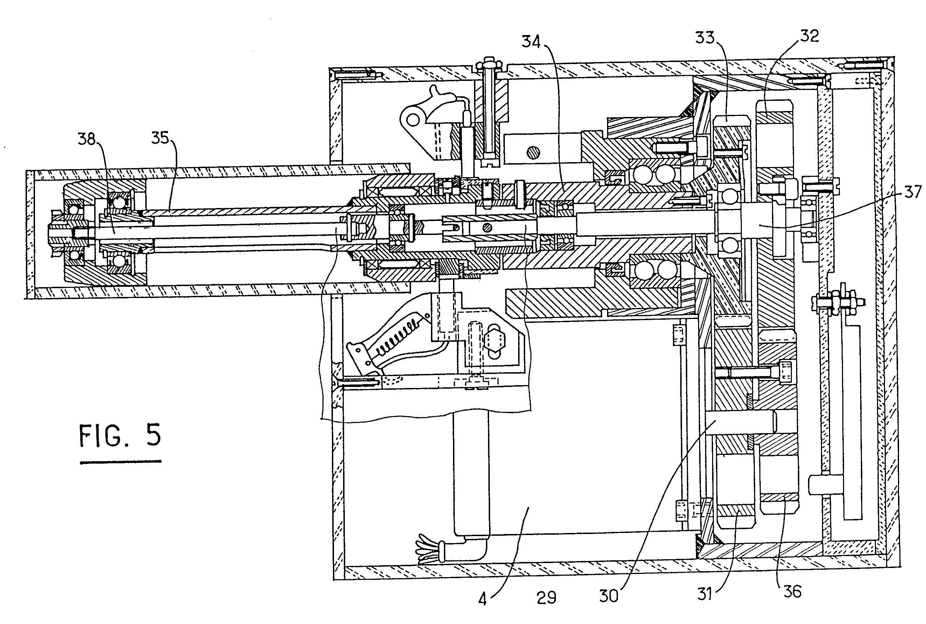

L'unité mécanique d'entraînement et de positionnement du capteur, telle que représentée à la figure 5 est constituée d'un moteur électrique pas-à-pas 4 sur l'arbre menant duquel sont portés, d'une part un pignon primaire 31 engrénant avec une roue primaire 33 qui entraîne un arbre primaire 34 auquel est raccordé un arbre tubulaire fendu 35, et d'autre part un pignon secondaire 36 engrénant avec une roue secondaire 32 qui entraîne l'arbre secondaire 37 et connecté à une tige filetée 38 disposée concentriquement à l'arbre fendu 35. Le mouvement relatif de la tige filetée 38 , dont la vitesse de rotation est de 0,75 fois celle de l'arbre fendu 35 tournant lui-même à la vitesse du moteur 4, permet d'obtenir un déplacement du capteur 3 selon un mouvement hélicoïdal d'un pas de 0,2 mm. On peut concevoir que le dispositif de la figure 5 peut être associé à des rallonges permettant d'augmenter la profondeur explorée par le capteur 3 dans les tubes 1.

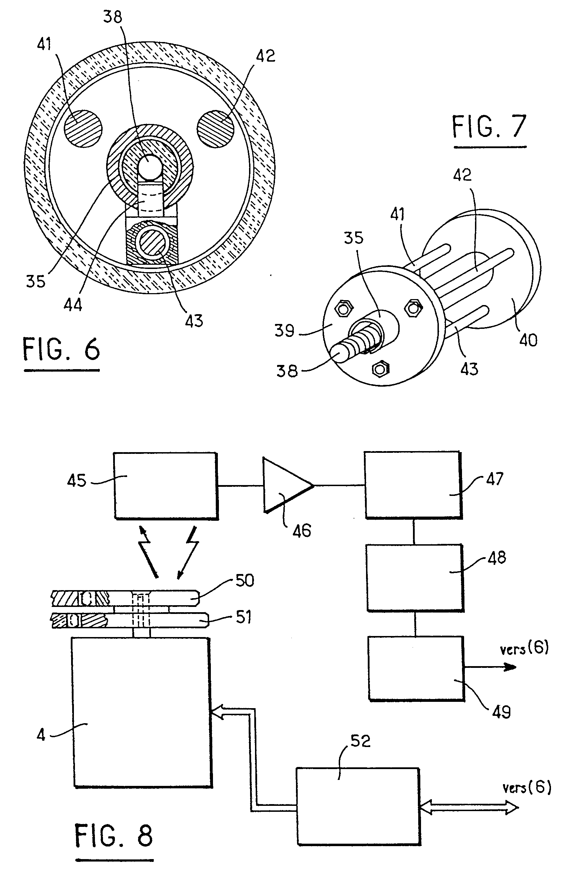

Les figures 6 et 7 représentent respectivement en coupe et en perspective, l'élément support du capteur 3 qui sera disposé dans l'intervalle entre deux flasques 39, 40 solidarisés par les entretoises 41, 42, 43 dont l'une 43 est une entretoise d'entraînement clavetée par un téton 44 à l'arbre

fendu 35 et engrénant avec la tige filetée 38. L'ensemble du support de capteur peut ainsi coulisser dans le tube 1.

Sur la figure 8 est représentée l'unité de mesure de vitesse et de synchronisation image, cette unité permettant la synchronisation de la vitesse du moteur et de la fréquence d'acquisition des données. En effet la vitesse limitante pour l'acquisition des données est celle de la formation de l'image sur la console graphique 11 constituant les moyens de visualisation. Cette unité permet d'adapter la vitesse d'acquisition des données, en fonction de la vitesse du moteur 4, à celle de la formation de l'image sur la console graphique 11. Cette unité est constituée d'un senseur optique 45 dont le signal est ensuite amplifié par l'amplificateur 46 et l'amplificateur différentiel 47, puis filtré au moyen d'un filtre passe-bas du quatrième ordre 48 coopérant avec l'unité de transmission par courant 49 pour envoyer ledit signal à l'unité de traitement en ligne 6. Le senseur est activé par un réflecteur 50 fixé sur un pignon 51 solidaire de l'axe de rotation du moteur 4.

Le moteur 4 est commandé par l'unité de commande moteur 52, cette commande étant réalisée via l'intensité et non la tension du courant, ce qui permet de travailler rapidement et à longue distance. Cette unité est pilotée par l'unité de traitement en ligne 6.

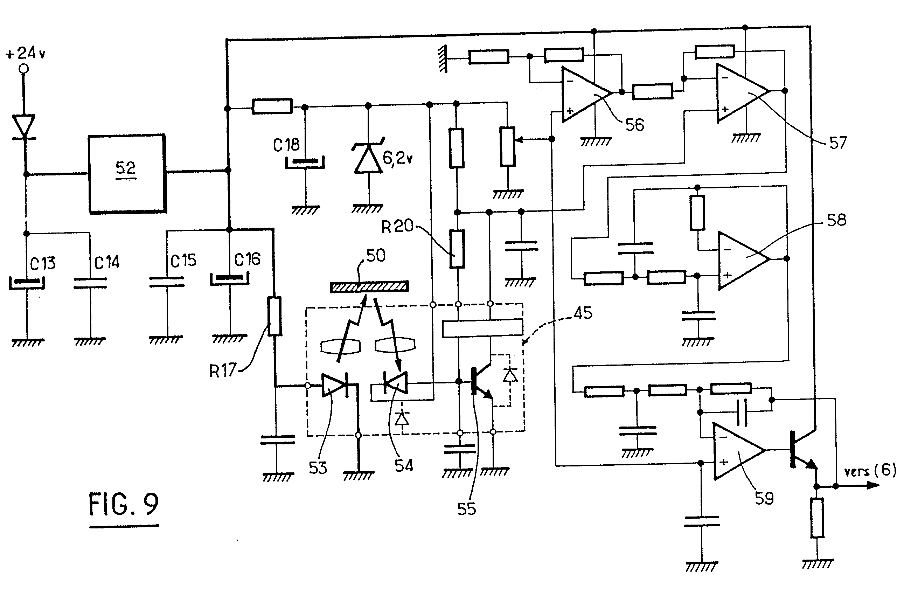

Après chaque tour de moteur (après l'enregistrement d'une ligne de donnée), l'unité de mesure de vitesse et de synchronisation image, telle que représentée sur la figure 9, émet un signal électrique vers l'unité de traitement en ligne 6 garantissant à l'ordinateur le changement de ligne et lui permettant de vérifier la vitesse angulaire et le bon fonctionnement du moteur 4. Ceci est rendu possible grâce à l'agencement électronique représenté schématiquement à la figure 9, agencement dans lequel est prévu un senseur optique 45 générateur du signal et associé au réflecteur 50. Le circuit est alimenté sous 15 volts par le bloc d'alimentation 52 via les condensateurs de filtrage $C_{13}$ $C_{14}$, $C_{15}$, $C_{16}$, $C_{18}$. L'intensité lumineuse de la diode électroluminescente 53 est fixée par la résistance $R_{17}$, le courant de la diode réceptrice 54 est amplifié par le transistor 55 (contre-réactionné par la résistance $R_{20}$ afin de stabiliser le point de fonctionnement) interne au capteur 3 avant d'être pris en compte par un amplificateur différentiel à haute impédance d'entrée 56, 57. Le signal, qui est très bruité à cause de la proximité du moteur 4, est lissé par deux filtres passe-bas du deuxième ordre en cascade 58, 59. Le deuxième filtre, amplificateur 59,délivre un signal de sortie qui commute entre 0 et 15 volts.

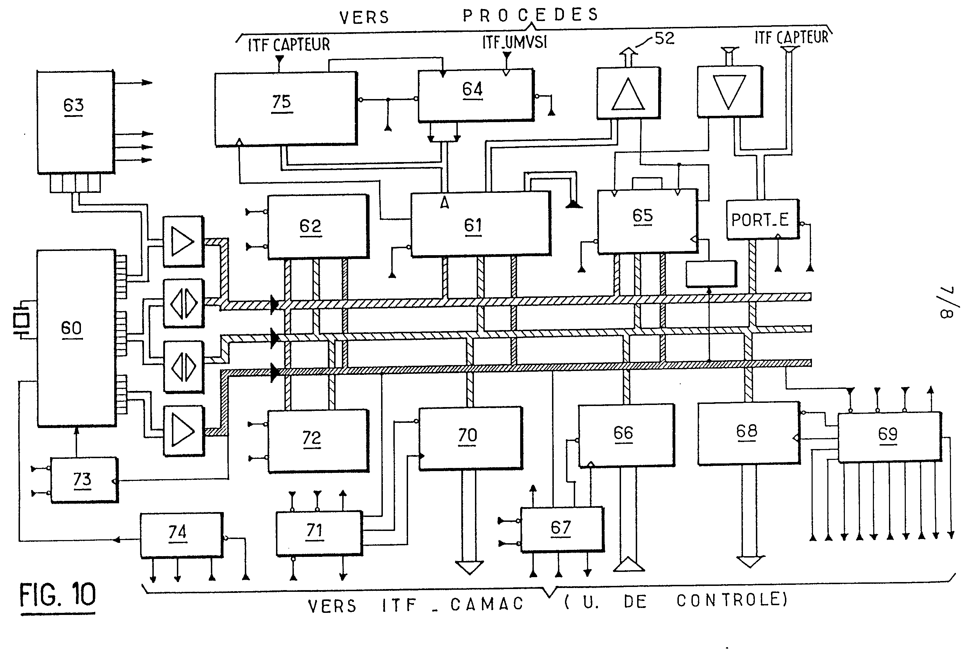

Sur la figure 10 est représenté un schéma synoptique de l'unité de traitement en ligne 6, permettant à l'endoscope d'atteindre le but fixé,qui est de stocker dans une mémoire magnétique une image digitalisée des racines en contact avec la paroi de tubes implantés dans le sol, cette image étant soumise à des traitements ultérieurs et pouvant être visualisée sur un écran graphique.

Le stockage, le traitement, la visualisation de l'image se réalisent à l'aide de diverses fonctions qu'on peut résumer de la manière suivante :

En premier lieu le contrôle des procédés, c'est-à-dire l'arrivée en série des données fournies par le capteur, le contrôle de la position du capteur, la gestion de la synchronisation ligne-image/moteur, la commande du moteur.

Le traitement et le filtrage des données, à savoir le filtrage numérique de l'image par rapport à un niveau de gris sélectionnés au vu des courbes de densité optique que l'appareil permet d'obtenir,le formatage des données et l'acheminement des données et des informations de l'état des procédés vers l'unité de contrôle.

La multiplicité de ces fonctions a conduit les inventeurs à répartir les tâches ainsi spécifiées entre deux unités informatiques,d'une part, l'unité de traitement en ligne 6 qui assure les fonctions précédemment énoncées, construites autour d'un microprocesseur dont l'unité centrale pourra être le 8085 AH-2 de Intel, et d'autre part l'unité de contrôle constituée par un microordinateur JLSI -64 (Enertec-Schlumberger).

Comme représenté sur la figure 10, cette unité de traitement en ligne 6 est constituée de plusieurs parties :

1. Une unité centrale 60 dont les activités sont dirigées par des programmes stockés en mémoires non volatiles et effaçables par rayonnement ultra-violet (EPROM de type 2716).

2. Les mémoires vives (Ram ) dans lesquelles on stocke des informations intermédiaires, Ram-horloge 61, où des informations formatées, Ram-tampon 62, prêtes à être envoyées vers l'unité de contrôle 7.

3. Le décodeur d'adresse 63 composé de 3 circuits permettant d'adresser individuellement les différents périphériques.

4. Les circuits participant au contrôle des procédés :

l'unité asynchrone de réception et de transmission 75 qui transforme les données séries venant du capteur en données parallèles (5bits ou plus).

le circuit de synchronisation ligne-image/moteur : les données provenant de l'unité asynchrone de réception/transmission 75 et du circuit de synchronisation 64 transitent par le port A du circuit 61 avant d'être pris en compte par l'unité centrale 60.

les circuits d'amplification et de mise en forme pour l'unité de commande du moteur pas-à-pas : les signaux de retour de la commande moteur ainsi que le signal de contrôle de position du capteur 3 transitent par le port E vers l'unité centrale 60.

La fréquence de conversion série/parallèle est fournie par l'horloge interne du circuit 61, tandis que la vitesse de rotation du moteur pas-à-pas est dictée puis vérifiée par les horloges du circuit 65.

5. Les circuits permettant les liaisons avec l'unité de contrôle 7 sont réalisés à travers un bus CAMAC non représenté sur les dessins.

Les ordres concernant les tâches à executer par l'unité centrale 60 transitent à travers les registres "L-commande" 66. L'unité centrale 60 est informée de la présence de ces ordres par un signal du type "drapeau" sur le circuit "synchro- commandes 67 généré par les instructions du programme de l'unité de contrôle 7.

Les états des procédés en relation avec les tâches précédemment définies sont fournis à l'unité de contrôle 7 à travers les registres "L-état" 68 et les circuits "synchro-état" 69 de même type selon les mêmes procédures.

Les données provenant du capteur 3, transitant par le port A, sont filtrées et formatées par l'unité centrale 60 et puis stockées dans les mémoires tampons 62. Elles sont ensuite envoyées vers l'unité de contrôle 7 à travers les registres "L-données" 70 et les circuits "synchro-données" 71 également de même type et selon les mêmes procédures.

On notera que le temps d'accès aux mémoires 72 étant lent par rapport au cycle élémentaire de l'unité centrale, cette dernière est synchronisée par un circuit "synchro-. EPROM " 73. Par ailleurs le nombre de périphériques branchés sur l'unité centrale étant important, il est nécessaire d'amplifier la sortie des bus par des amplificateurs. L'unité centrale 60 est en outre initialisée selon les besoins de l'unité de contrôle 7 par le circuit "INIT" 74.

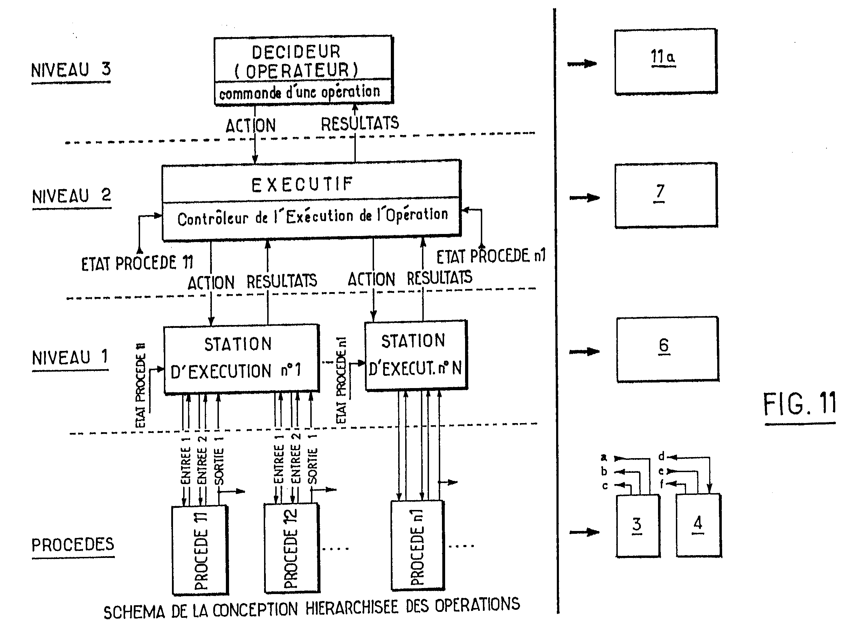

La figure 11 représente un modèle général de fonctionnement du Rhizoscope dans lequel a représente l'alimentation des capteurs, b l'enregistrement des données, c la fin de course du capteur, d le bus de pilotage de l'unité de commande du moteur, e l'alimentation du moteur et f le détecteur de fin de ligne. Il est clair que ce modèle peut être généralisé à d'autres types d'utilisation de l'unité de contrôle 7. D'autre part, dans le schéma actuel, une seule station d'exécution fonctionne, l'unité en ligne. On peut envisager des extensions par création d'autres stations, par exemple par une acquisition simultanée sur plusieurs tubes 1 à partir de plusieurs capteurs 3.

L'appareil selon l'invention fonctionne de la manière suivante :

11

Après avoir positionné les tubes 1 au voisinage des racines, on fait descendre le capteur 3 jusqu'à un certain niveau sous l'action du moteur 4 et l'on commence l'opération d'exploration des contacts entre racines 14 et tubes 1 en énergisant la diode laser 12 qui émet une lumière incidente qui frappe la racine sous la forme d'un faisceau de section gaussienne (écart type, par exemple de 100 µm) dont la lumière incidente est partiellement "diffusée" par la racine qu'elle frappe, ce qui la rend particulièrement visible par rapport à une racine éclairée par une lumière diffuse. A chaque tâche blanche d'un contact d'une racine avec un tube, la lumière diffusée par la racine ainsi en contact est captée par le photorécepteur 15. Le signal obtenu digitalisé sous 8 bits et transmis à l'unité asynchrone de réception/transmission 18 qui transforme les données parallèles venant du capteur en données sérieset les transmet à l'unité de traitement en ligne 6 via une deuxième unité asynchrone de réception transmission 75 qui transforme les données séries en données parallèles (5 bits). Cette unité de traitement en ligne 6, qui reçoit les instructions de l'unité de contrôle etles enregistre au moyen d'un registre "à bascule",puis les exécute, reçoit ainsi des informations en retour qui sont elles-mêmes envoyées dans le même type de registre, puis saisies par l'unité de contrôle. Chaque série d'instructions correspond à l'une des 16 tâches clairement définies qui se trouvent dans la mémoire permanente (EPROM 72) de l'unité de traitement en ligne. Parmi ces tâches, figurent en particulier le filtrage des données venant du capteur : les données significatives, c'est-à-dire celles correspondant à l'observation de racines au contact du tube exploré, comprenant les paramètres suivants : amplitude du signal sous 5 bits, coordonnées du point d'observation (profondeur sous 14 bits, position sur la circonférence explorée sous 10 bits), sont formatées, puis enregistrées ligne par ligne (une ligne correspondant à une circonférence du tube) à l'aide de deux mémoires tampons (62) puis envoyées à l'unité de contrôle. Comme spécifié ci-dessus,le dialogue entre l'unité de traitement en ligne et l'unité de de contrôle se fait par un bus CAMAC.

On notera que l'unité de contrôle constitue, dans l'appareil de l'invention, l'exécutif dans une
structure de travail conçue selon un modèle de commande
hiérarchisée (voir figure 11). En effet, l'ensemble du système a été organisé de façon à ce que l'opérateur mettant
en oeuvre l'instrument sur le terrain puisse intervenir
régulièrement pour en contrôler la bonne marche et fixer
certains paramètres, par exemple de seuils de détection des
racines et analogues.

Les fonctions de l'unité de contrôle sont :
- d'assister l'opérateur (décideur dans le schéma de la figure 11) dans le choix d'une commande;
- de vérifier que cette commande est exécutable, ceci pour
pallier à une erreur humaine;
- de tester le bon fonctionnement du matériel et du logiciel du niveau inférieur avant de lancer l'opération;
- de veiller au bon déroulement de l'opération et d'en tenir
informé l'opérateur;
- enfin d'effectuer différents types de traitement les uns
en relation avec la visualisation des données sur la console graphique 11, les autres avec le traitement numérique de ces données. Par exemple, on peut citer les différents procédés conduisant à un agrandissement d'une image racine-tube, à l'élimination des bruits de fond, au
calcul de la densité des racines en fonction de la couche
de sol étudié au calcul de l'allongement des racines entre deux dates de mesure et analogues.

Ces calculs peuvent être exécutés soit immédiatement sur le terrain ("on line") soit ultérieurement
grâce à l'enregistrement des données sur disquette ("off
line") .

Les données transmises par l'unité de traitement en ligne à l'unité de contrôle peuvent être visualisées
comme décrit ci-dessus au moyen d'une console graphique 11,
éventuellement associée à une imprimante de recopie d'image,
non utilisée sur le terrain, qui sert d'une part à la conversation entre l'opérateur et l'unité de contrôle et, d'au-

0157678

tre part, à la visualisation des résultats. Un logiciel de traitement d'images a été conçu spécialement pour cette utilisation, il peut cependant être utilisé à de multiples autres applications.

Ainsi, se trouve résolu grâce à l'endoscope électronique selon la présente invention, le problème posé par l'examen des sites difficiles d'accès, par exemple les zones d'enracinement des plantes, cet endoscope comportant une diode laser émettrice, dont la lumière incidente est diffusée par le site à explorer, ce qui le rend particulièrement visible, cette diode laser étant associée à un dispositif photosensible, par exemple un photorécepteur.

Il est évident que l'appareil de la présente invention peut être associé à n'importe quel moyen automatisé et piloté par l'unité de contrôle, par exemple des dispositifs télescopiques de positionnement de l'ensemble d'asservissement du capteur, des dispositifs de carroussel permettant un déplacement et un positionnement du capteur automatiques et analogues, et n'est pas limité à l'étude de l'enracinement des plantes.

REVENDICATIONS

1. Endoscope électronique, notamment utilisable pour l'étude des racines des plantes dans le sol, sans endommager ces dernières, caractérisé en ce qu'il comprend des moyens d'exploration (3) du type capteur, constitué par une diode laser (12) associée à un dispositif photosensible (15).

2. Endoscope électronique selon la revendication 1, caractérisé en ce que la diode laser (12) est associée à une optique de focalisation (13).

3. Endoscope électronique selon la revendication 1, caractérisé en ce que le dispositif photosensible est un photorécepteur (15).

4. Endoscope électronique selon l'une quelconque des revendications 1 à 3, caractérisé en ce que sont prévus :

- des moyens de traitement de l'information lumineuse transmise par le photorécepteur (15) constitué par des moyens de digitalisation (17) et de transmission (18) de données à une unité de traitement en ligne (6) coopérant elle-même avec une unité de contrôle associée d'une part, à des moyens de stockage de l'information (10) et, d'autre part, à des moyens de visualisation (11); et

- des moyens de positionnement et d'entraînement (4) du moyen d'exploration (3) constitué par un dispositif de déplacement du capteur selon un mouvement hélicoïcal de faible pas, par un mouvement relatif résultant de la coopération de deux organes (35, 38) entraînés par deux systèmes d'engrenages respectifs (31,33; 36, 32) actionnés par un moteur pas-à-pas (4).

5. Endoscope électronique selon la revendication 2, caractérisé en ce que la diode laser (12) est couplée à un photodétecteur (23) destiné à réguler le flux lumineux émis par la diode laser.

6. Endoscope électronique selon l'une quelconque des revendications 1 à 5, caractérisé en ce que le moteur pas-à-pas (4) est associé à un dispositif constitué d'une tige filetée (38) disposée coaxialement à un arbre creux longitudinalement fendu (35), ces éléments (35, 38) étant entraînés respectivement par des pignons primaire (31) et secondaire (36) engrénant respectivement avec des roues primaire (33) et secondaire (32), de façon à imprimer à la tige filetée (38) un mouvement relatif de plus petit pas que le pas hélicoïdal d'origine.

7. Endoscope électronique selon l'une quelconque des revendications 1 à 6, caractérisé en ce que sont prévus des moyens de synchronisation de la vitesse de rotation du moteur coopérant d'une part avec un senseur (45) et d'autre part avec l'unité de traitement en ligne (6) via l'unité de commande du moteur (52).

8. Endoscope électronique selon la revendication 7, caractérisé en ce que le senseur (45) est activé par un élément réflecteur (50) fixé sur un pignon (51) solidaire de l'axe de rotation du moteur (4).

9. Endoscope électronique selon l'une quelconque des revendications 1 à 8, caractérisé en ce que l'unité de traitement en ligne est constituée par un microprocesseur.

10. Endoscope électronique selon l'une quelconque des revendications 1 à 9, caractérisé en ce que l'unité de contrôle est constituée par un micro-ordinateur.

11. Endoscope électronique selon l'une quelconque des revendications 9 et 10, caractérisé en ce que l'unité de traitement en ligne est reliée à l'unité de contrôle par un bus.

12. Endoscope électronique selon la revendication 1, caractérisé en ce que les moyens de stockage de l'information sont constitués par une unité de disques souples à simple face et double densité.

A

0,75 m

2                2

10 à 15°

1          1

B

2                              2

1          1

FIG. 1

FIG. 2

vers (6)

FIG. 3

FIG. 4

FIG. 5

4/8

0157678

FIG. 7

FIG. 6

FIG. 8

vers(6)

vers(6)

0157678

vers (6)

57

58

59

56

45

55

54

50

53

R20

6,2v

C18

R17

C16

C15

52

C14

C13

+24v

**FIG. 9**

VERS PROCEDES

ITF CAPTEUR — ITF-UMVSI — 52 — ITF CAPTEUR

**FIG. 10**

VERS ITF - CAMAC (U. DE CONTROLE)

0157678

SCHEMA DE LA CONCEPTION HIERARCHISEE DES OPERATIONS

FIG. 11